# EUROPÄISCHE PATENTSCHRIFT

(11) **EP 1 848 571 B1**
(45) Veröffentlichungstag und Bekanntmachung des Hinweises auf die Patenterteilung: **08.10.2008**
(21) Anmeldenummer: 06706494.9
(22) Anmeldetag: 31.01.2006
(51) Int. Cl.: B25J 19/00

(54) **LEITUNGSFÜHRUNGSEINRICHTUNG UND INDUSTRIEROBOTER MIT EINER SOLCHEN EINRICHTUNG**
LINE GUIDE DEVICE AND INDUSTRIAL ROBOT EQUIPPED WITH SUCH A DEVICE
SYSTEME DE GUIDAGE DE CABLE ET ROBOT INDUSTRIEL COMPRENANT UN SYSTEME DE GUIDAGE DE CABLE DE CE TYPE

(30) Priorität: 01.02.2005 DE 102005004813
(43) Veröffentlichungstag der Anmeldung: 31.10.2007
(73) Patentinhaber: LEONI Kabel Holding GmbH & Co. KG, 90402 Nürnberg (DE)
(72) Erfinder: BURLOT, Claude, F-78830 Bullion (FR)
(74) Vertreter: Tergau & Pohl Patentanwälte
(86) Internationale Anmeldenummer: PCT/EP2006/000792
(87) Internationale Veröffentlichungsnummer: WO 2006/082013

(56) Entgegenhaltungen:
- DE-U1- 8 519 446
- DE-U1- 20 113 742
- DE-U1- 29 720 048
- US-B1- 6 230 859
- PATENT ABSTRACTS OF JAPAN Bd. 2002, Nr. 07, 3. Juli 2002 (2002-07-03) -& JP 2002 067828 A (YAZAKI CORP), 8. März 2002 (2002-03-08)

## Beschreibung

Die Erfindung betrifft eine Leitungsführungseinrichtung zur Führung einer Versorgungsleitung, insbesondere zur Führung eines Schlauchpakets eines Industrieroboters. Die Erfindung betrifft weiterhin einen Industrieroboter mit einer solchen Leitungsführungseinrichtung.

Bei den heute üblicherweise eingesetzten mehrachsigen Industrierobotem werden dem vordersten, auch als Roboterhand bezeichneten Roboterarm über ein Schlauchpaket mehrere Einzelleitungen zur Versorgung eines an der Roboterhand angeordneten Werkzeugs, beispielsweise ein Schweißwerkzeug, zugeführt. Die Einzelleitungen sind beispielsweise elektrische Versorgungskabel, elektrische Steuerkabel, Datenkabel sowie Medienführungen für Gase oder Flüssigkeiten. Diese Einzelleitungen werden in dem so genannten Schlauchpaket zusammengefasst und von einem schlauchförmigen Schutzmantel umgeben. Ein derartiges Schlauchpaket ist zum einen wegen der Relativbewegungen der Roboterarme zueinander und insbesondere auch wegen der oftmals widrigen Umgebungsbedingungen (hohe Temperaturen, aggressive Medien, wie Schweißspritzer, etc.) hohen Belastungen ausgesetzt.

Um eine zuverlässige Führung des Schlauchpakets zu ermöglichen, wird üblicherweise eine Leitungsführungseinrichtung eingesetzt, welche derart beschaffen ist, dass eine Ausgleichsbewegung des Schlauchpakets bei einer Relativbewegung zwischen zwei Roboterarmen ermöglicht ist. Eine Leitungsführungseinrichtung bei einem Industrieroboter ist beispielsweise aus der DE 201 13 742 U1 zu entnehmen.

Aus der JP-A-2002 067 828ist eine Einrichtung zur Führung einer Versorgungsleitung, insbesondere für eine Kraftfahrzeug-Schiebetür bekannt, die in ihrer Längsrichtung eine Ausgleichsbewegung der Versorgungsleitung ermöglicht. Die Versorgungsleitung ist innerhalb eines Gehäuses verschieblich gelagert und von einem Schutzschlauch umgeben, an dessen einem Ende innerhalb des Gehäuses ein Ringanschlag angeformt ist. An diesem stützt sich eine den Schutzschlauch umgebende Schraubenfeder ab, die eine Rückstellkraft ausübt.

Der Erfindung liegt die Aufgabe zugrunde, eine konstruktiv einfach aufgebaute und zuverlässig wirkende Leitungsführungseinrichtung anzugeben, die eine Ausgleichsbewegung für eine Versorgungsleitung zwischen zwei relativ zueinander beweglichen Maschinenteilen ermöglicht, insbesondere für ein Schlauchpaket eines Industrieroboters.

Die Aufgabe wird gemäß der Erfindung gelöst durch eine Leitungsführungseinrichtung mit den Merkmalen des Patentanspruchs 1. Danach weist die Leitungsführungseinrichtung ein vorderes, in ihrer Längsrichtung verschiebliches Befestigungselement auf, das zur Anordnung einer ersten Klemmschelle vorgesehen ist, bzw. das eine erste Klemmschelle umfasst. In dieser Klemmschelle wird die Versorgungsleitung festgeklemmt, so dass sie in Längsrichtung fixiert ist. Weiterhin weist die Leitungsführungseinrichtung ein Gleitführungselement auf, welches zur Befestigung an einem Maschinenteil, beispielsweise einem Roboterarm, vorgesehen ist. Im Gleitführungselement ist eine starre Gleitstange in Längsrichtung gegen die Rückstellkraft eines Rückstellelements gleitend gelagert. Die Gleitstange ist zugleich an dem vorderen Befestigungselement befestigt.

Das vordere Befestigungselement ist durch diese Konstruktion daher gegenüber dem ortsfesten Gleitführungselement längsverschieblich gelagert. Mit dem vorderen Befestigungselement ist auch die Klemmschelle und die Versorgungsleitung in Längsrichtung relativ zu dem ortsfesten Gleitführungselement verschieblich. Muss nunmehr bei einer Roboterbewegung das Schlauchpaket nachgeführt werden, so wird aufgrund der von der Roboterhand ausgeübten Zugkraft das Schlauchpaket nach vorne gezogen, so dass das Befestigungselement gegen die Rückstellkraft des Rückstellelements nach vorne gezogen wird. Sobald die Zugkraft nachlässt, wird das Befestigungselement wieder in einer rückwärtige Position gebracht, so dass das Schlauchpaket im Bereich zur Roboterhand hin immer entsprechend der Spannkraft des Rückstellelements gespannt ist und keine Schleifen wirft. Insgesamt ist daher diese Leitungsführungsrichtung nach Art einer Teleskopstange oder Teleskopgabel ausgebildet, wobei das Schlauchpaket außerhalb der Teleskopelemente geführt ist.

Unter Gleitstange wird hier allgemein ein sich in Axialrichtung erstreckendes Gleitelement verstanden, welches vorzugsweise kreisrund und insbesondere innen hohl und damit rohrartig ausgebildet ist. Durch die Ausgestaltung mit der gleitend durch die Gleitführungsrichtung geführten Gleitstange und der Befestigung der Versorgungsleitung in der am vorderen Befestigungselement fixierten Klemmschelle ist mit einer einfachen und zugleich robusten Konstruktion ein zuverlässiger Betrieb sichergestellt.

Die Leitungsführungseinrichtung ist allgemein geeignet, um eine Ausgleichsbewegung einer Versorgungsleitung zu ermöglichen, die zwei relativ zueinander bewegliche Maschinenteile, insbesondere Roboterarme, miteinander verbindet.

Zweckdienlicherweise stützt sich das Rückstellelement einerseits am Gleitführungselement und andererseits an einem hinteren an der Gleitstange befestigten Anschlag ab. Dies ermöglicht einen kompakten Aufbau, da für das Rückstellelement keine weitere aufwändige Konstruktion erforderlich ist. Vielmehr erstreckt sich die Gleitstange vom vorderen Befestigungselement durch das Gleitführungselement hindurch und das Rückstellelement greift im hinteren Bereich einerseits an einem mit der Gleitstange fest verbundenen Angriffspunkt und andererseits am Gleitführungselement an.

Vorzugsweise ist hierbei das Rückstellelement eine Schraubenfeder, durch die die Gleitstange geführt ist. Auch dies gewährleistet einen kompakten und robusten Aufbau.

Gemäß einer zweckdienlichen Weiterbildung ist die Gleitstange durch eine Durchgangsöffnung des Gleitführungselements geführt, wobei in der Durchgangsöffnung ein rohrförmiges Gleitelement eingelegt ist, durch das die Gleitstange im Wesentlichen spielfrei geführt ist. Durch die spielfreie oder nahezu spielfreie Führung im Gleitelement ist eine sichere Führung gewährleistet. Zum anderen ist durch das Gleitelement selbst ein möglichst reibungsarmes Gleiten ermöglicht. Hierzu besteht das Gleitelement aus einem geeigneten Werkstoff mit einem geringen Reibungskoeffizienten. Insbesondere besteht das Gleitelement aus Kunststoff, wohingegen das Gleitführungselement bevorzugt aus Metall ist.

Um bei der Rückholbewegung ein Anschlagen des vorderen Befestigungselements an dem Gleitführungselement zu vermeiden oder zumindest abzumildern ist zwischen dem Gleitführungselement und dem Befestigungselement ein Stoßdämpfer vorgesehen. Dieser ist insbesondere stirnseitig an einem der beiden Teile, vorzugsweise an dem Gleitführungselement, befestigt.

In einer zweckdienlichen Ausgestaltung ist die Gleitstange im Befestigungselement austauschbar befestigt. Insgesamt kann daher die Gleitstange problemlos ausgetauscht werden. Dadurch ist die Leitungsführungseinrichtung modular aufgebaut und kann problemlos an unterschiedliche Einsatzzwecke, beispielsweise unterschiedliche Robotergrößen, etc. angepasst werden. Um unterschiedlich lange Ausgleichsbewegungen zu ermöglichen, werden beispielsweise unterschiedlich lange Gleitstangen eingesetzt. Parallel hierzu können unterschiedliche Rückstellkräfte über die Wahl geeigneter Rückstellelemente eingestellt werden. Die Leitungsführungseinrichtung ist daher nach Art eines Baukastensystems verwirklicht, um sie problemlos an unterschiedliche Anforderungen anpassen zu können.

In einer zweckdienlichen Weiterbildung ist im Bereich zwischen dem Gleitführungselement und dem Befestigungselement ein zweites Rückstellelement, insbesondere eine zweite Schraubenfeder, vorgesehen. Diese dient zum einen dazu, die rückwärtige Position des Befestigungselementes fest zu definieren. Zugleich wird durch die zweite Schraubenfeder ein Anschlagen des vorderen Befestigungselements an dem Gleitführungselement vermieden. Auch wird die Rückholbewegung nicht abrupt abgebremst, sondern federnd.

Da die Versorgungsleitung in der Leitungsführungseinrichtung lediglich in der ersten Klemmschelle am vorderen Befestigungselement gehalten und ansonsten nicht weiter geführt ist, ist gemäß einer zweckdienlichen Weiterbildung vorgesehen, dass im rückwärtigen Bereich hinter dem Befestigungselement eine Abdeckung angeordnet ist. Diese Abdeckung verhindert einen Kontakt der Versorgungsleitung mit den beweglichen Elementen der Leitungsführungseinrichtung, beispielsweise mit der Gleitstange und der Feder. Ein Verhaken oder Verklemmen ist daher nicht möglich. Diese Abdeckung ist hierbei vorzugsweise am Gleitführungselement befestigt. Die Abdeckung ist beispielsweise lediglich eine plattenförmige Abdeckung. Alternativ kann sie auch als ein die Leitungsführungseinrichtung zumindest teilweise umschließender Kasten ausgebildet sein, in dem das Gleitführungselement und der rückwärtige Teilbereich der Gleitstange mit der Schraubenfeder angeordnet ist. Der Kasten weist hierbei einen ausreichenden Freiraum für die Gleitbewegung der Gleitstange auf. Prinzipiell besteht auch die Möglichkeit, dass das Gleitführungselement selbst insgesamt hülsenartig oder nach Art eines Kastens ausgebildet ist, an dessen Stirnseite die Gleitstange eingeführt ist. Bei dieser Variante ist das Rückstellelement bevorzugt innerhalb des hülsenartigen Gleitführungselements angeordnet ist, und greift beispielsweise einerseits an einer Rückwand der Hülse und andererseits an einer endseitigen Stirnseite der Gleitstange an.

Um auch bei hohen Kräften eine möglichst gute und sichere Führung zu ermöglichen, sind gemäß einer zweckdienlichen Weiterbildung zwei parallel zueinander angeordnete Gleitstangen vorgesehen. Insgesamt ist daher die Leitungsführungseinrichtung redundant ausgebildet, wobei die beiden Gleitstangen symmetrisch zueinander ausgebildet und geführt sind.

Um eine möglichst hohe Stabilität zu erreichen, sind die beiden Gleitstangen im Gleitführungselement gemeinsam geführt, wobei jeder Gleitstange eine eigene Durchgangsöffnung zugeordnet ist. Das Gleitführungselement ist daher ein einheitlicher, insbesondere metallener Block, durch den beabstandet zueinander die beiden Gleitstangen geführt sind. Bevorzugt ist hier vorgesehen, dass die Gleitführungseinrichtung einen Befestigungsflansch mit Bohrungslöchern aufweist, durch die Befestigungselemente, insbesondere Schrauben, zur Befestigung an einem Roboterarm geführt werden können.

Zweckdienlicherweise ist weiterhin das Befestigungselement ebenfalls für beide Gleitstangen gemeinsam vorgesehen. In diesem sind die Gleitstangen insbesondere klemmend befestigt. Sie werden hierbei bevorzugt an einer Stirnseite des Befestigungselements eingeführt. Eine an die Stirnseite angrenzende obere Flachseite des Befestigungselements wird zweckdienlicherweise für die Anordnung der ersten Klemmschelle herangezogen. Die obere Flachseite weist hierzu Gewindebohrungen auf, so dass die erste Klemmschelle problemlos angeschraubt werden kann.

Bevorzugt ist hierbei das Befestigungselement und/oder die erste Klemmstelle derart ausgebildet, dass die Klemmschelle relativ zu dem Befestigungselement drehbar ist oder zumindest in unterschiedlichen Drehstellungen fixiert werden kann. Insbesondere bei der im Betrieb drehbaren Klemmschelle ist eine Dreh-Ausgleichsbewegung für die Versorgungsleitung ermöglicht.

Die Aufgabe wird gemäß der Erfindung weiterhin gelöst durch einen Industrieroboter gemäß Anspruch 12. Die im Hinblick auf die Leitungsführungseinrichtung angeführten Vorteile und bevorzugten Ausgestaltungen sind sinngemäß auch auf den Industrieroboter zu übertragen.

Die Leitungsführungseinrichtung ist hierbei an einem hinteren Maschinenteil, also einem hinteren Roboterarm, mit dem Gleitführungselement befestigt. Hierzu wird das Gleitführungselement mit Hilfe des erwähnten Flansches am hinteren Roboterarm angeflanscht.

Üblicherweise wird das Schlauchpaket am vorderen Maschinenteil, insbesondere an einem vorderen Roboterarm oder der Roboterhand in einer zweiten Klemmschelle gehalten. Gemäß einer zweckdienlichen Weiterbildung sind nunmehr zwischen der ersten Klemmschelle der Leitungsführungseinrichtung und der zweiten Klemmschelle an der Roboterhand keine weiteren Befestigungs- oder Führungselemente vorgesehen. Vielmehr ist im Bereich zwischen diesen beiden Klemmschellen die Versorgungsleitung frei beweglich, so dass sie den Bewegungen der Roboterhand gut folgen kann.

Weiterhin ist durch die unverschiebliche, klemmende Befestigung der Versorgungsleitung in der ersten Klemmschelle einerseits und in der zweiten Klemmschelle andererseits die Länge der Versorgungsleitung zwischen den beiden Klemmschellen fix. Die Versorgungsleitung selbst gleitet daher durch keinerlei Führungselement. Insofern ist die Versorgungsleitung keinerlei Reibeinflüssen ausgesetzt und es besteht auch nicht die Gefahr, dass die Versorgungsleitung sich innerhalb von Führungselementen verkantet oder stark belastet wird.

Auch im rückwärtigen Bereich nach der ersten Befestigungsklemme ist zweckdienlicherweise kein weiteres Führungs- oder Halteelement vorgesehen, durch das die Versorgungsleitung gleitend geführt werden müsste. Vielmehr ist im Anschluss an die Leitungsführungseinrichtung die Versorgungsleitung zur Ermöglichung der Ausgleichsbewegung in einem Bogen zu einem Anschlussadapter geführt, welcher an einem Roboterarm befestigt ist. Am Anschlussadapter endet das Schlauchpaket. Der Anschlussadapter dient als Trenn- oder Anschlussstelle für die Einzelleitungen.

Ausführungsbeispiele der Erfindung werden im Folgenden anhand der Figuren erläutert. Es zeigen jeweils in schematischen und teilweise stark vereinfachten Darstellungen:
- Fig. 1: eine erste Ausführungsvariante einer Leitungsführungseinrichtung in einer perspektivischen Darstellung,
- Fig. 2: eine zweite Ausführungsvariante der Leitungsführungseinrichtung in einer perspektivischen Darstellung,
- Fig. 3: eine dritte Ausführungsvariante der Leitungsführungseinrichtung in einer perspektivischen Darstellung,
- Fig. 4 und 5: eine stark vereinfachte Schema-Darstellung eines Industrieroboters mit der Leitungsführungseinrichtung.

In den Figuren sind gleiche oder gleichwirkende Teile mit den gleichen Bezugszeichen versehen.

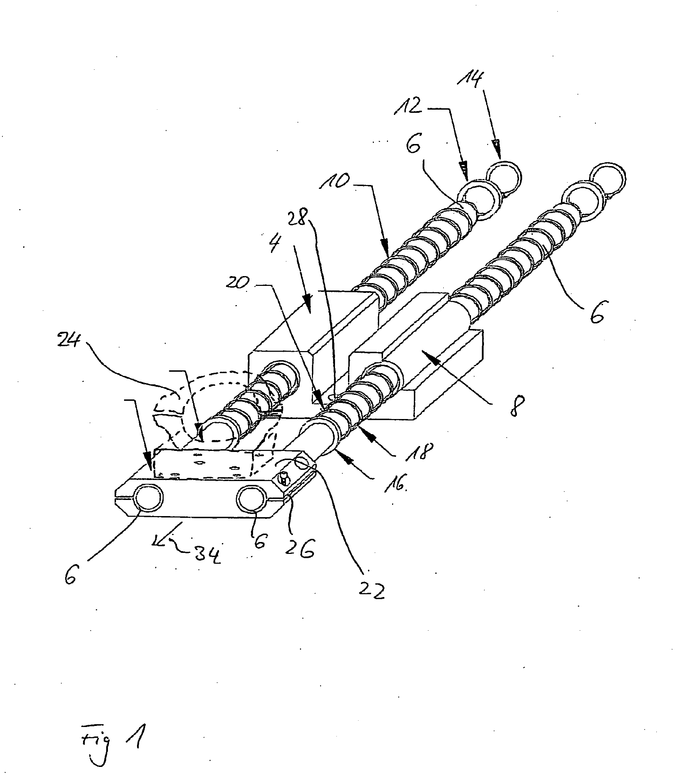

Wie anhand der Fig. 1 bis 3 zu entnehmen ist, umfasst eine Leitungsführungseinrichtung ein vorderes Befestigungselement 2, ein Gleitführungselement 4, zwei rohrförmige Gleitstangen 6, zwei Gleithülsen 8, zwei rückwärtige Schraubenfedern 10, zwei rückwärtige Anschlagringe 12, zwei rückwärtige Klemmringe 14 zur Fixierung der Anschlagringe 12, zwei vordere Anschlagringe 16 sowie zwei vordere Schraubenfedern 18. An einer Stirnseite des Gleitführungselements 4 ist ein Stoßdämpferelement 20 angeordnet. Die vorderen Schraubenfedern 18 wirken ebenfalls nach Art eines Stoßdämpfers.

Die Gleitstangen 6 sind jeweils als Rohre ausgebildet und stirnseitig in das plattenartig ausgebildete Befestigungselement 2 eingeführt. An einer oberen Flachseite 22 weist das Befestigungselement 2 mehrere Gewindebohrungen auf, die zur Befestigung einer ersten Klemmschelle 24 insbesondere auch in unterschiedlichen Drehpositionen, dienen. Die erste Klemmschelle 24 ist in Fig. 1 durch gestrichelte Linien skizziert. Die Gleitstangen 6 sind mit ihren vorderen Enden in rohrförmigen Durchtrittsöffnungen des Befestigungselements 2 klemmbefestigt. Hierzu ist das Befestigungselement 2 an seinen Randseiten geschlitzt ausgeführt. Der Schlitz 26 erstreckt sich radial bis zu der Durchtrittsöffnung für die Gleitstange 6 und kann mittels Schrauben verengt werden, so dass die Gleitstangen 6 geklemmt werden.

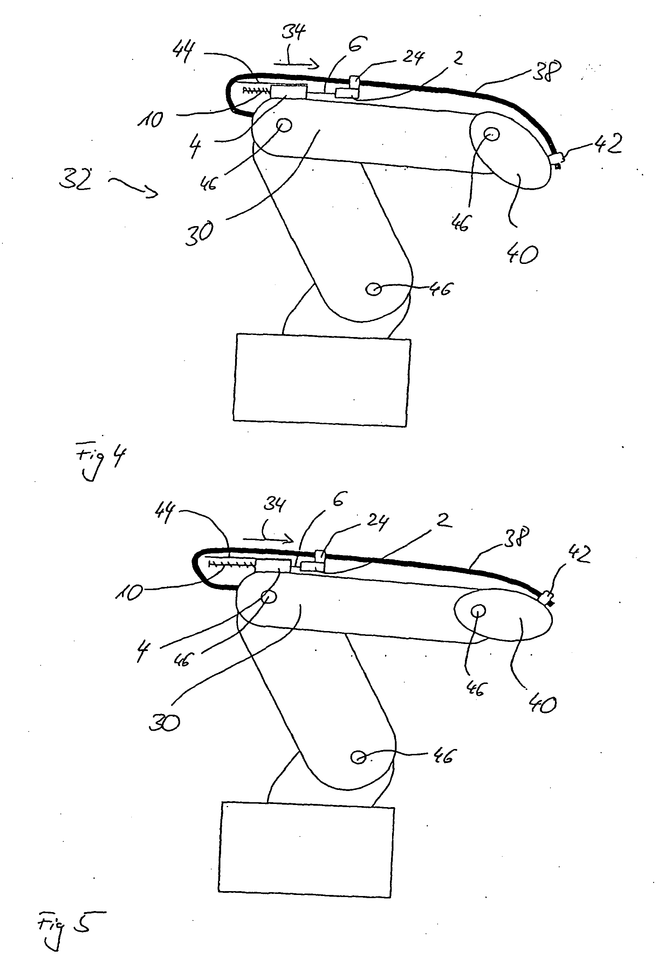

Das Gleitführungselement 4 ist insgesamt einstückig ausgebildet und weist einen bodenseitigen Befestigungsflansch mit mehreren Bohrungslöchern 28 auf. Der Befestigungsflansch dient zum Befestigen an einem Roboterarm 30 eines Industrieroboters 32 (vgl. Fig. 4,5).

Das Gleitführungselement 4 weist für jede Gleitstange 6 Durchgangsbohrungen auf, in die die Gleithülse 8 eingeschoben ist. Durch die Gleithülse 8 ist wiederum jeweils die Gleitstange 6 hindurchgeführt. Im rückwärtigen Bereich ist die rückwärtige Schraubenfeder 10 über die jeweilige Gleitstange 6 geschoben. Die Schraubenfedern 10 stützen sich mit ihrem einen Ende jeweils an dem Gleitführungselement 4 ab. Mit ihrem rückwärtigen Ende stützen sie sich an dem rückwärtigen Anschlagring 12 ab, der mit dem Klemmring 14 ortsfest gesichert ist. In den Figuren sind die Ringe 12,14 nach Art einer Explosionsdarstellung dargestellt.

Die vorderen Schraubenfedern 18 stützen sich ebenfalls mit ihrem einen Ende an dem Gleitführungselement 4 und mit ihrem anderen Ende an dem vorderen Anschlagring 16 ab. Über die Positionierung der Anschlagringe 12,16 kann die Vorspannung der Schraubenfedern 10,18 eingestellt werden.

Zur Montage der gesamten Leitungsführungseinrichtung werden die Gleitstangen 6 durch die jeweilige Gleithülse 8 hindurchgeschoben. Anschließend oder zuvor werden die rückwärtigen Schraubenfedern 10 und ggf. die vorderen Schraubenfedern 18 über die Gleitstangen 6 aufgeschoben. Die Enden der Gleitstangen 6 werden einerseits gemeinsam im Befestigungselement 2 geklemmt bzw. werden mit den rückwärtigen Anschluss- und Klemmringen 12,14 versehen.

In der Ausführungsvariante nach Fig. 1 werden im vorderen Bereich vor der Befestigung des Befestigungselements 2 noch die vorderen Schraubenfedern 18 und die vorderen Anschlagringe 16 montiert.

Die Gleitstangen 6 sind in der Gleithülse 8 bis auf ein notwendiges Spiel für eine möglichst reibungsarme Führung gleitend geführt. Bei einer Auslenkung des Befestigungselements 2 in Längs- oder Pfeilrichtung 34 wird die rückwärtige Schraubenfeder 10 komprimiert. Sobald die ausgeübte Zugkraft in Längsrichtung 34 nachlässt, wird das Befestigungselement 2 wieder in eine rückwärtige, zurückgezogene Position gebracht. Das Befestigungselement 2 ist daher im Vergleich zu dem ortsfesten Gleitführungselement 4 in Längsrichtung 34 frei beweglich.

Bei der Rückwärtsbewegung schlägt das Befestigungselement 2 im Ausführungsbeispiel der Fig. 1 gegen die vorderen Anschlagringe 16 an und die vordere Schraubenfeder 18 wird komprimiert, so dass die Rückholbewegung abgefedert wird und das Befestigungselement 2 nicht gegen das Gleitführungselement 4 anschlägt.

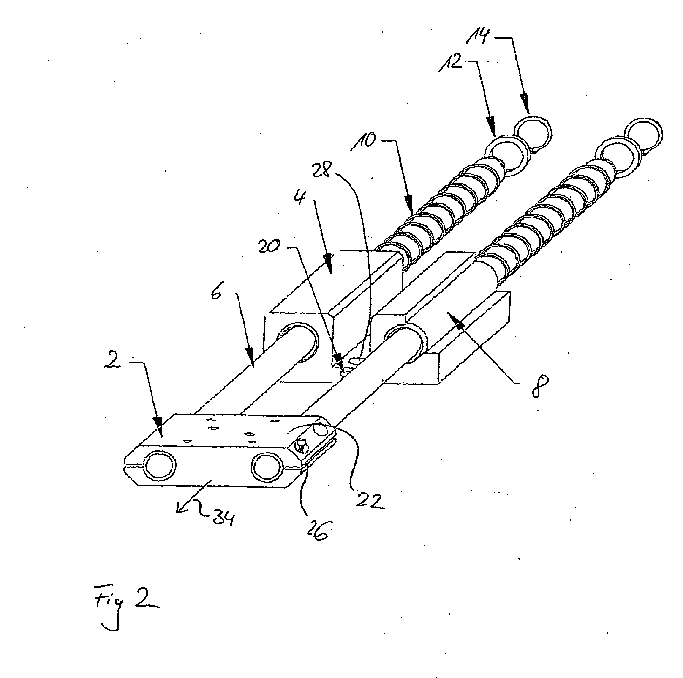

Bei der Ausführungsvariante gemäß Fig. 2 ist im Unterschied zu der Ausführungsvariante gemäß Fig. 1 auf die vorderen Schraubenfedern und die vorderen Anschlagringe 16 verzichtet. In diesem Fall kann das Befestigungselement 2 bis zu dem Gleitführungselement 4 zurückgezogen werden, so dass diese beiden Elemente mit ihren beiden Stirnseiten gegeneinander verfahren. Um hier ein heftiges Anschlagen zu vermeiden, ist das Stoßdämpferelement 20 vorgesehen, welches den Anschlag des Befestigungselements 2 abfedert.

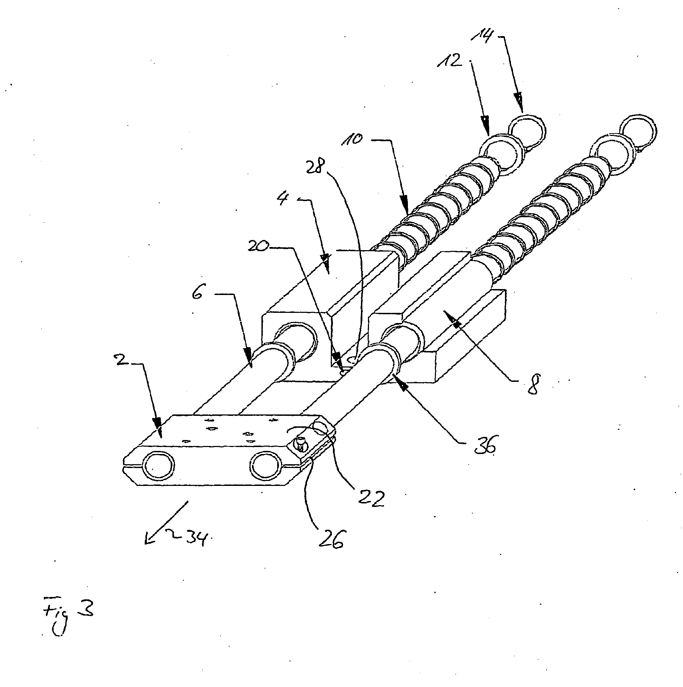

Im Ausführungsbeispiel der Fig. 3 ist im Unterschied zu dem nach Fig. 2 ein ringförmiges Stoppelement 36 an jeder Gleitstange 6 im vorderen Bereich vorgesehen. Diese Stoppelemente 36 begrenzen die Rückholbewegung. Sowohl die Stoppelemente 36 als auch die vorderen Anschlagringe 16 sind beispielsweise mit hier nicht näher dargestellten Klemmringen an unterschiedlichen axialen Positionen an den Gleitstangen 6 zu befestigen. Durch die Wahl der axialen Position der hinteren Anschlagringe 12 und/oder der vorderen Anschlagringe 16 kann die Vorspannung der Schraubenfedern 10,18 eingestellt werden.

Die Funktionsweise der Leitungsführungseinrichtung wird im Folgenden anhand der Fig. 4 und 5 näher erläutert. Diese zeigen einen mehrachsigen Industrieroboter 32, welcher mehrere Roboterarme 30,40 aufweist, die gegeneinander um sogenannte Roboterachsen 46 drehbar sind. Insbesondere handelt es sich um einen sechsachsigen Industrieroboter 32, welcher sechs Dreh -oder Bewegungsfreiheitsgrade hat. In den Fig. 4 und 5 sind lediglich einige der Bewegungsfreiheitsgrade dargestellt.

Die Leitungsführungseinrichtung ist mit dem Gleitführungselement 4 an einem der Roboterarme befestigt, der nachfolgend auch als hinterer Roboterarm 30 bezeichnet wird. Eine als Schlauchpaket bezeichnete Versorgungsleitung 38 ist von einer hier nicht näher dargestellten und als Adapterplatte ausgeführten Trennstelle an einem der hinteren Roboterarme über die Leitungsführungseinrichtung zu einer Roboterhand 40 bzw. zu einem vorderen Roboterarm geführt. Der hintere Roboterarm 30 entspricht bei einem sechsachsigen Industrieroboter einer sogenannten J3-Ebene und die Roboterhand 40 einer sogenannten J6-Ebene.

Die Versorgungsleitung 38 ist neben der Trennstelle lediglich in der ersten Klemmschelle 24 der Leitungsführungseinrichtung sowie in einer zweiten Klemmschelle 42 an der Roboterhand 40 gehalten. In den Klemmschellen 24,42 ist die Versorgungsleitung 38 jeweils klemmbefestigt, so dass sie durch die Klemmschellen 24,42 nicht hindurchgleitet. Dadurch ist die Länge der Versorgungsleitung 38 zwischen den Klemmschellen 24,42 fix.

Bei einer Relativbewegung der Roboterhand 42 zu dem hinteren Roboterarm 30, beispielsweise von der in Fig. 5 gezeigten Situation zu der in Fig. 4 dargestellten Situation, wird eine Zugkraft auf die Versorgungsleitung 38 ausgeübt. Aufgrund der fixen Befestigung der Versorgungsleitung 38 an der ersten Klemmschelle 24 wird das Befestigungselement 2 in Längsrichtung 34 nach vorne gegen die Rückstellkraft der rückwärtigen Schraubenfeder 10 gezogen. Sobald die Zugkraft nachlässt und die Roboterhand 40 wieder in die in Fig. 5 dargestellte Position zurückkehrt, wird die Versorgungsleitung 38 über das Befestigungselement 2 wieder in eine rückwärtige Position zurückgeholt.

Im hinteren Teilbereich ist die Versorgungsleitung 38 in einem Bogen zu der hier nicht näher dargestellten Trennstelle geführt. Dieser Bogen ermöglicht eine Ausgleichsbewegung.

Um eine unerwünschte Berührung mit den einzelnen Komponenten der Leitungsführungseinrichtung zu vermeiden, ist eine Abdeckung 44 vorgesehen, die im Ausführungsbeispiel als ein plattenförmiges Element auf dem Gleitführungselement 4 angebracht ist.

Durch die hier beschriebene, nach Art einer Teleskopgabel ausgebildete Leitungsführungseinrichtung, bei der die Versorgungsleitung 38 außerhalb der Leitungsführungseinrichtung entlanggeführt wird und lediglich über die erste Klemmschelle 24 in Kontakt mit der Leitungsführungseinrichtung steht, ist eine sichere und zuverlässige Ausgleichsbewegung bei geringer Beanspruchung der Versorgungsleitung 38 erreicht. Zugleich weist die Leitungsführungseinrichtung einen vergleichsweise einfachen, kompakten und damit sehr robusten Aufbau auf.

### Bezugszeichenliste

- 2: Befestigungselement
- 4: Gleitführungselement
- 6: Gleitstange
- 8: Gleithülse
- 10: rückwärt. Schraubenfeder
- 12: rückwärt. Anschlagring
- 14: Klemmring
- 16: vorderer Anschlagring
- 18: vordere Schraubenfeder
- 20: Stoßdämpferelement
- 22: obere Flachseite
- 24: erste Klemmschelle
- 26: Schlitz
- 28: Bohrungslöcher
- 30: hinterer Roboterarm
- 32: Industrieroboter
- 34: Längsrichtung
- 36: Stoppelement
- 38: Versorgungsleitung
- 40: Rotorhand
- 42: zweite Klemmschelle
- 44: Abdeckung
- 46: Roboterachse

## Patentansprüche

1. Leitungsführungseinrichtung zur Führung einer Versorgungsleitung (38), insbesondere zur Führung eines Schlauchpakets eines Industrieroboters (32), die in ihrer Längsrichtung (34) eine Ausgleichsbewegung der Versorgungsleitung (38) ermöglicht und die hierzu ein vorderes in Längsrichtung (34) verschiebliches Befestigungselement (2) aufweist, das zur Anordnung einer ersten Klemmschelle (24) zur klemmenden Befestigung der Versorgungsleitung (38) vorgesehen ist, und die weiterhin ein ortsfestes Gleitführungselement (4) aufweist, in dem eine am Befestigungselement (2) befestigte starre Gleitstange (6) in Längsrichtung (34) gegen die Rückstellkraft eines Rückstellelements (10) gleitend gelagert ist.

2. Leitungsführungseinrichtung nach Anspruch 1,
bei der das Rückstellelement (10) sich einerseits am Gleitführungselement (4) und andererseits an einem hinteren an der Gleitstange (6) befestigten Anschlag (12) abstützt.

3. Leitungsführungseinrichtung nach Anspruch 1 oder 2,
bei der das Rückstellelement (10) eine Schraubenfeder ist, durch die die Gleitstange (6) geführt ist.

4. Leitungsführungseinrichtung nach einem der vorhergehenden Ansprüche,
bei der das Gleitführungselement (4) eine Durchgangsöffnung aufweist, in die eine Gleithülse (8) eingelegt ist, durch die die Gleitstange (6) geführt ist.

5. Leitungsführungseinrichtung nach einem der vorhergehenden Ansprüche,
bei der ein zwischen dem Gleitführungselement (4) und dem Befestigungselement (2) wirkendes Stoßdämpferelement (20) vorgesehen ist.

6. Leitungsführungseinrichtung nach einem der vorhergehenden Ansprüche, bei der die Gleitstange (6) im Befestigungselement (2) austauschbar befestigt ist.

7. Leitungsführungseinrichtung nach einem der vorhergehenden Ansprüche, bei der im Bereich zwischen dem Gleitführungselement (4) und dem Befestigungselement (2) ein zweites Rückstellelement (18), insbesondere eine zweite Schraubenfeder, vorgesehen ist.

8. Leitungsführungseinrichtung nach einem der vorhergehenden Ansprüche, bei der in einem rückwärtigen Bereich hinter dem Befestigungselement (2) eine Abdeckung (44) vorgesehen ist, derart, dass im montierten Zustand die Versorgungsleitung (38) oberhalb der Abdeckung verläuft.

9. Leitungsführungseinrichtung nach einem der vorhergehenden Ansprüche, bei der zwei parallel zueinander angeordnete Gleitstangen (6) vorgesehen sind.

10. Leitungsführungseinrichtung nach Anspruch 9,
bei der die beiden Gleitstangen (6) durch jeweils eine eigene Durchgangsöffnung gemeinsam im Gleitführungselement (4) geführt sind.

11. Leitungsführungseinrichtung nach Anspruch 9 oder 10,
bei der die beiden Gleitstangen (6) stirnseitig in das gemeinsame Befestigungselement (2) geführt sind und das Befestigungselement (2) eine an die Stirnseite angrenzende obere Flachseite (22) hat, die zur Befestigung der ersten Klemmschelle (24) ausgebildet ist.

12. Industrieroboter (32) mit einer Versorgungsleitung (38), die über zumindest eine Roboterachse (46) geführt ist, und mit einer Leitungsführungseinrichtung nach einem der vorhergehenden Ansprüche,
wobei die Leitungsführungseinrichtung ein vorderes in Längsrichtung (34) verschiebliches Befestigungselement (2) aufweist, das eine erste Klemmschelle (24) umfasst, in der die Versorgungsleitung (38) fixiert ist, und die Leitungsführungseinrichtung weiterhin ein an einem hinteren Roboterarm (30) befestigtes Gleitführungselement (4) aufweist, in dem eine am Befestigungselement (2) befestigte Gleitstange (6) in Längsrichtung (34) gegen die Rückstellkraft eines Rückstellelements (10) gleitend gelagert ist.

13. Industrieroboter (32) nach Anspruch 12,
bei der an einem vorderen Roboterarm eine zweite Klemmschelle vorgesehen ist und die Länge der Versorgungsleitung (38) zwischen den beiden Klemmschellen (24,42) unabhängig von der Bewegung konstant ist.

14. Industrieroboter (32) nach Anspruch 13,
bei der zwischen den beiden Klemmschellen (24,42) keine weiteren Führungs- oder Halteelemente angeordnet sind.

15. Industrieroboter nach einem der Ansprüche 12 bis 14,
bei der die Versorgungsleitung (38) in einem rückwärtigen Bereich hinter der ersten Klemmschelle (24) außerhalb der Leitungsführungseinrichtung verläuft.

16. Industrieroboter nach einem der Ansprüche 12 bis 15,
bei der die erste Klemmschelle (24) drehbar am Befestigungselement (2) befestigt ist.

## Claims

1. Line guide device for guiding a supply line (38), in particular for guiding a hose pack of an industrial robot (32), which allows a compensation movement of the supply line (38) in its longitudinal direction (34) and which for this purpose has a front attachment element (2) which can move in the longitudinal direction (34) and is intended for arrangement of a first clamping band (24) for clamping attachment of the supply line (38) and which also has a fixed-position sliding guide element (4), in which a rigid sliding rod (6), which is attached to the attachment element (2), is mounted such that it can slide in the longitudinal direction (34) against the resetting force of a resetting element (10).

2. Line guide device according to Claim 1,
in which the resetting element (10) is supported on the one hand on the sliding guide element (4) and on the other hand on a stop (12) which is attached to the sliding rod (6) at the rear.

3. Line guide device according to Claim 1 or 2,
in which the resetting element (10) is a helical spring, by means of which the sliding rod (6) is guided.

4. Line guide device according to one of the preceding claims,
in which the sliding guide element (4) has an aperture opening into which a sliding sleeve (8) is inserted, by means of which the sliding rod (6) is guided.

5. Line guide device according to one of the preceding claims,
in which a shock-absorber element (20) is provided, and acts between the sliding guide element (4) and the attachment element (2).

6. Line guide device according to one of the preceding claims,
in which the sliding rod (6) is mounted in the attachment element (2) such that it can be replaced.

7. Line guide device according to one of the preceding claims,
in which a second resetting element (18), in particular a second helical spring, is provided in the area between the sliding guide element (4) and the attachment element (2).

8. Line guide device according to one of the preceding claims,
in which a cover (44) is provided in a rearward area behind the attachment element (2), such that the supply line (38) runs above the cover in the installed state.

9. Line guide device according to one of the preceding claims,
in which two sliding rods (6) are provided and are arranged parallel to one another.

10. Line guide device according to Claim 9,
in which the two sliding rods (6) are each guided jointly in the sliding guide element (4) by means of their own aperture opening.

11. Line guide device according to Claim 9 or 10,
in which the two sliding rods (6) are guided at the end into the common attachment element (2), and the attachment element (2) has a top flat face (22) which is adjacent to the end face and is designed for attachment of the first clamping band (24).

12. Industrial robot (32) having a supply line (38) which is guided via at least one robot shaft (46), and having a line guide device according to one of the preceding claims,
wherein the line guide device has a front attachment element (2) which can move in the longitudinal direction (34) and has a first clamping band (24), in which the supply line (38) is fixed, and the line guide device also has a sliding guide element (4) which is attached to a rear robot arm (30) and in which a sliding rod (6), which is attached to the attachment element (2), is mounted such that it can slide in the longitudinal direction (34) against the resetting force of a resetting element (10).

13. Industrial robot (32) according to Claim 12,
in which a second clamping band is provided on a front robot arm, and the length of the supply line (38) between the two clamping bands (24, 42) is constant, irrespective of the movement.

14. Industrial robot (32) according to Claim 13,
in which no further guide or holding elements are arranged between the two clamping bands (24, 42).

15. Industrial robot according to one of Claims 12 to 14,
in which the supply line (38) runs outside the line guide device in a rearward area behind the first clamping band (24).

16. Industrial robot according to one of Claims 12 to 15,
in which the first clamping band (24) is attached to the attachment element (2) such that it can rotate.

## Revendications

1. Dispositif de guidage de câble pour le guidage d'un câble d'alimentation (38), en particulier pour le guidage d'un ensemble de tuyaux flexibles d'un robot industriel (32), qui permet un mouvement de compensation du câble d'alimentation (38) dans sa direction longitudinale (34) et qui présente à cet effet un élément de fixation (2) avant déplaçable dans la direction longitudinale (34), qui est prévu pour monter un premier collier de serrage (24) pour fixer par serrage le câble d'alimentation (38), et qui présente en outre un élément de guidage coulissant local (4), dans lequel une tige de glissement (6) rigide fixée dans l'élément de fixation (2) est montée coulissante dans la direction longitudinale (34) à l'encontre de la force de rappel d'un élément de rappel (10).

2. Dispositif de guidage de câble selon la revendication 1, dans lequel l'élément de rappel (10) s'appuie d'une part sur l'élément de guidage coulissant (4) et d'autre part sur une butée arrière (12) fixée à la glissière (6).

3. Dispositif de guidage de câble selon la revendication 1 ou 2, dans lequel l'élément de rappel (10) est un ressort à boudin, à travers lequel la glissière (6) est guidée.

4. Dispositif de guidage de câble selon l'une quelconque des revendications précédentes, dans lequel l'élément de guidage coulissant (4) présente un orifice de passage, dans lequel est introduite une douille coulissante (8), à travers laquelle la glissière (6) est guidée.

5. Dispositif de guidage de câble selon l'une quelconque des revendications précédentes, dans lequel est prévu un élément amortisseur (20) agissant entre l'élément de guidage coulissant (4) et l'élément de fixation (2).

6. Dispositif de guidage de câble selon l'une quelconque des revendications précédentes, dans lequel la glissière (6) est fixée de manière interchangeable dans l'élément de fixation (2).

7. Dispositif de guidage de câble selon l'une quelconque des revendications précédentes, dans lequel un second élément de rappel (18), en particulier un second ressort à boudin, est prévu dans la zone comprise entre l'élément de guidage coulissant (4) et l'élément de fixation (2).

8. Dispositif de guidage de câble selon l'une quelconque des revendications précédentes, dans lequel un couvercle (44) est prévu dans une zone arrière derrière l'élément de fixation (2), de sorte que le câble d'alimentation (38) s'étend au-dessus du couvercle dans l'état monté.

9. Dispositif de guidage de câble selon l'une quelconque des revendications précédentes, dans lequel deux tiges coulissantes (6) disposées parallèles l'une par rapport à l'autre sont prévues.

10. Dispositif de guidage de câble selon la revendication 9, dans lequel les deux tiges coulissantes (6) sont guidées par un orifice de passage approprié respectif communément dans l'élément de guidage coulissant (4).

11. Dispositif de guidage de câble selon la revendication 9 ou 10, dans lequel les deux tiges coulissantes (6) sont guidées antérieurement dans l'élément de fixation commun (2) et l'élément de fixation (2) présente un côté plat (22) supérieur limitant le côté antérieur, qui est réalisé pour fixer le premier collier de serrage (24).

12. Robot industriel (32) comportant un câble d'alimentation (38), qui est guidé par l'intermédiaire d'au moins un axe de robot (46), et comportant un dispositif de guidage de câble selon l'une quelconque des revendications précédentes, dans lequel le dispositif de guidage de câble présente un élément de fixation (2) avant déplaçable dans le sens longitudinal (34), qui comprend un premier collier de serrage (24), dans lequel le câble d'alimentation (38) est fixé, et le dispositif de guidage de câble présente en outre un élément de guidage coulissant (4) fixé à un bras arrière de robot (30), dans lequel une glissière (6) fixée dans l'élément de fixation (2) est montée coulissante dans la direction longitudinale (34) à l'encontre de la force de rappel d'un élément de rappel (10).

13. Robot industriel (32) selon la revendication 12, dans lequel un second collier de serrage est prévu dans un bras avant du robot et la longueur du câble d'alimentation (38) entre les deux colliers de serrage (24, 42) est constante indépendamment du mouvement.

14. Robot industriel (32) selon la revendication 13, dans lequel aucun autre élément de guidage ou d'arrêt n'est disposé entre les deux colliers de serrage (24, 42).

15. Robot industriel selon l'une des revendications 12 à 14, dans lequel le câble d'alimentation (38) s'étend dans une zone arrière derrière le premier collier de serrage (24) à l'extérieur du dispositif de guidage de câble.

16. Robot industriel selon l'une des revendications 12 à 15, dans lequel le premier collier de serrage (24) est fixé rotatif dans l'élément de fixation (2).
